Europäisches Patentamt

European Patent Office

Office européen des brevets

(11) Veröffentlichungsnummer: **0 278 349 B1**

(12) **EUROPÄISCHE PATENTSCHRIFT**

(45) Veröffentlichungstag der Patentschrift: **29.01.92**

(21) Anmeldenummer: **88101371.8**

(22) Anmeldetag: **01.02.88**

(51) Int. Cl.⁵: **C08L 25/02**, C08L 25/12, //(C08L25/02,71:02)

(54) **Antistatische, thermoplastische Formmassen auf Basis von Vinylaromatpolymerisaten II.**

(30) Priorität: **13.02.87 DE 3704486**

(43) Veröffentlichungstag der Anmeldung:
**17.08.88 Patentblatt 88/33**

(45) Bekanntmachung des Hinweises auf die
Patenterteilung:
**29.01.92 Patentblatt 92/05**

(84) Benannte Vertragsstaaten:
**DE ES FR GB IT NL**

(56) Entgegenhaltungen:
**EP-A- 0 061 692**
**DE-B- 1 244 398**

**Römpps Chemie Lexikon, Band V, Seite 3276**

(73) Patentinhaber: **BAYER AG**

**W-5090 Leverkusen 1 Bayerwerk(DE)**

(72) Erfinder: **Buysch, Hans-Josef, Dr.**
**Brandenburger Strasse 28**
**W-4150 Krefeld(DE)**
Erfinder: **Schön, Norbert, Dr.**
**Wilhelmshofallee 82**
**W-4150 Krefeld(DE)**
Erfinder: **Eichenauer, Herbert, Dr.**
**Goethestrasse 71**
**W-4047 Dormagen(DE)**
Erfinder: **Ott, Karl-Heinz, Dr.**
**Paul-Klee-Strasse 54**
**W-5090 Leverkusen 1(DE)**
Erfinder: **Pischtschan, Alfred**
**Zur Eiche 33**
**W-5067 Kürten-Eichhof(DE)**

## Beschreibung

Gegenstand der Erfindung sind antistatische, thermoplastische Formmassen auf Basis von gegebenenfalls kautschukmodifizierten Polymerisaten aus Vinylaromaten, z.B. Styrol und/oder $\alpha$-Methylstyrol unf Acrylnitril und/oder Acrylaten, die als antistatisches Mittel einen durch einen Radikalbildner modifizierten Polyether enthalten.

Die meisten Kunststoffe sind aufgrund ihrer chemischen Konstitution elektrische Isolatoren mit einem hohen elektrischen Oberflächenwiderstand. Das führt bei der Verarbeitung und im Gebrauch solcher Massen leicht zur elektrostatischen Aufladung der Kunststoffoberflächen. Die Folge sind vielfältige Störungen und Belästigung in der Praxis, z.B. schnelle Verschmutzung und Verstaubung der Kunststoffteile, wobei sich charakteristische Staubfiguren an der Oberfläche ausbilden. Dies gilt im besonderen Maß auch für gegebenenfalls kautschukmodifizierte als Formmassen verwendete Polymerisate aus Vinylaromaten und Acrylnitril, z.B. Styrol-Acrylnitril-Copolymerisate (SAN) und Pfropfpolymerisate von Styrol und Acrylnitril auf Polybutadien (ABS).

Die antistatische Ausrüstung solcher Formmassen ist bekannt. Als antistatische Mittel werden z.B. Alkyl- und Arylsulfonate (DE-OS 1 544 652), Amine (DE-PS 1 258 083), quartäre Ammoniumsalze, Amide, Phosphorsäuren sowie Alkyl- und Arylphosphonate empfohlen.

Die so antistatisch ausgerüsteten Formmassen haben noch Mängel. Viele der genannten Antistatika sind wenig wirksam und müssen in hohen Konzentrationen eingesetzt werden; viele dieser niedermolekularen Verbindung wandern an die Oberfläche. Deshalb erhält man oft Formteile mit inhomogenen und fleckigen Oberflächen oder sogar Oberflächenbelägen. Häufig werden auch mechanische Eigenschaften, wie die Wärmeformbeständigkeit, stark beeinträchtigt.

Auch reine Polyether, wie z.B. in DE-PS 1 244 398, als hochmolekulare Antistatika vorgeschlagen, müssen zur sicheren Antistatikausrüstung von Styrolpolymerisaten in Mengen von ca. 5 Gew.-% oder mehr eingesetzt werden. Das führt zu fleckigen und schmierigen Oberflächen bis hin zu Oberflächenbelägen auf den Kunststoff-Fertigteilen.

Durch Pfropfpolymerisation von Styrol und Acrylnitril auf solche Polyether wie in EP-A-0 061 692 beschrieben, kann zwar die Antistatikwirkung verbessert werden, jedoch treten bei der Verarbeitung von Styrolpolymerisaten, die solche Antistatika enthalten, bei Temperaturen > 150°C gelbe bis braune Verfärbungen auf.

Es wurde nun gefunden, daß man durch Behandlung von Polyalkylenethern mit radikalbildenden Substanzen sehr gut wirksame Antistatika für Vinylaromatpolymerisate erhält, die die mechanischen Eigenschaften, die Oberflächeneigenschaften, Farbe und Thermostabilität der Vinylaromatpolymerisate nicht beeinträchtigen. Die Antistatikwirkung ist insbesondere gegenüber unmodifizierten Polyalkylenethern stark verbessert.

Gegenstand der Erfindung sind somit antistatische, thermoplastische Formmassen, bestehend aus

I 99,8 - 95 Gew.-% eines gegebenenfalls kautschukmodifizierten Polymerisats aus Vinylaromaten, anderen Vinylmonomeren und üblichen Zusätzen, bestehend aus

(A) 0 - 100 Gew.-% eines oder mehrerer Pfropfpolymerisate aus 10-95 Gew.-% Kautschuk und 90-5 Gew.-% auf den Kautschuk pfropfcopolymerisierte Monomere, wobei als Monomere Styrol, $\alpha$-Methylstyrol, Methylmethacrylat ausgewählt sind oder eine Mischung von 95-50 Gew.-% Styrol, $\alpha$-Methylstyrol, kernsubstituiertem Styrol, Methylmethacrylat oder Mischungen daraus und 5 - 50 Gew.-% (Meth)-Acrylnitril, Maleinsäureanhydrid, N-substituierte Maleinimide oder Mischungen daraus pfropfpolymerisiert sind und die Kautschuke Glasübergangstemperaturen < 10°C aufweisen und in Form wenigstens partiell vernetzter Teilchen eines mittleren Teilchendurchmessers ($d_{50}$) von 0,05 bis 20 $\mu$m vorliegen, und

(B) 100-0 Gew.-% eines oder mehrerer thermoplastischer Vinylpolymerisate, wobei die Monomere ausgewählt sind aus der Reihe Styrol, $\alpha$-Methylstyrol, kernsubstituiertem Styrol, Methylmethacrylat, Acrylnitril, Methacrylnitril, Maleinsäureanhydrid, Vinylacetat, N-substituierte Maleinimide oder Mischungen daraus, und

II. 0,2 bis 5,0 Gew.-% eines Polyalkylenethers mit Molekulargewichten zwischen 500 und 15.000, der ein Reaktionsprodukt aus Polyolen und einem oder mehreren Alkylenoxiden ist und der mit 5 bis 0,05 Gew.-% Radikalbildner, bezogen auf die Menge an Polyalkylenethen modifiziert ist, die zwischen 20 und 200°C ausreichend schnell in Radikale zerfallen.

Ein weiterer Gegenstand der Erfindung ist ein Verfahren zur antistatischen Ausrüstung von gegebenenfalls kautschukmodifizierten Polymerisaten von Vinylaromaten und anderen Vinylmonomeren,wie oben beschrieben, das dadurch gekennzeichnet ist, daß man zu 99.8 bis 95 gew. % Polymerisat I 0,2 bis 5 Gew.-%, vorzugsweise 1,0 bis 3,0 Gew.-%, eines Polyalkylenethers mit Molekulargewichten zwischen 500 und 15.000 zufügt, der ein Reaktionsprodukt aus Polyolen mit einem oder mehreren Alkylenoxiden ist und der mit 5 bis 0,05 Gew.-% Radikalbildner, bezogen auf die Menge an Polyalkylenether, modifiziert ist, die zwischen 20 und 200°C ausreichend schnell in Radikale zerfallen.

Gegebenenfalls kautschukmodifizierte Copolymerisate aus Vinylaromaten und anderen Vinylmonomeren (I) im Sinne der Erfindung sind Mischungen aus (A) 0 - 100 Gew.-% eines oder mehrerer Pfropfpolymerisate und (B) 100 - 0 Gew.-% eines oder mehrerer thermoplastischen Vinylpolymerisate.

Pfropfpolymerisate (A) im Sinne der Erfindung sind solche, in denen auf einen Kautschuk entweder Styrol, α-Methylstyrol, Methylmethacrylat oder eine Mischung von 95 - 50 Gew.-% Styrol, α-Methylstyrol, kernsubstituiertem Styrol, Methylmethacrylat oder Mischungen daraus und 5 - 50 Gew.-% (Meth)Acrylnitril, Maleinsäureanhydrid, N-substituierte Maleinimide oder Mischungen daraus pfropfpolymerisiert sind. Geeignete Kautschuke sind praktisch alle Kautschuke mit Glasübergangstemperaturen < 10°C. Beispiele sind Polybutadien, Polyisopren, Styrol-Butadien-Copolymerisate, Acrylnitril-ButadienCopolymerisate, Acrylkautschuke, EPM-Kautschuke (Ethylen/Propylen-Kautschuke) und EPDM-Kautschuke (Ethylen/ Propylen/Dien-Kautschuke), die als Dien ein nichtkonjugiertes Dien, wie z.B. Hexadien-1,5 oder Norbornadien, in kleinen Mengen enthalten. Bevorzugt sind Dienkautschuke.

Die Pfropfmischpolymerisate (A) enthalten 10 - 95 Gew.-%, insbesondere 20 - 70 Gew.-%, Kautschuk und 90 - 5 Gew.-%, insbesondere 80 - 30 Gew.-%, pfropfcopolymerisierte Monomere. Die Kautschuke liegen in diesen Pfropfmischpolymerisaten in Form wenigstens partiell vernetzter Teilchen eines mittleren Teilchendurchmessers ($d_{50}$) von 0,05 bis 20,0 $\mu$m, bevorzugt von 0,1 bis 2,0 $\mu$m und besonders bevorzugt von 0,1 bis 0,8 $\mu$m, vor. Derartige Pfropfmischpolymerisate können durch radikalische Pfropfcopolymerisaten von Styrol, α-Methylstyrol, kernsubstituiertem Styrol, (Meth)Acrylnitril, Methylmethacrylat, Maleinsäureanhydrid, N-substituiertem Maleinimid in Gegenwart der zu pfropfenden Kautschuke hergestellt werden. Bevorzugte Herstellungsverfahren sind die Emulsions-, Lösungs-, Masse- oder Suspensionspolymerisation.

Die Copolymerisate (B) können aus den Pfropfmonomeren für (A) oder ähnlichen Monomeren durch Polymerisation aufgebaut werden, insbesondere aus Styrol, α-Methylstyrol, Halogenstyrol, Acrylnitril, Methacrylnitril, Methylmethacrylat, Maleinsäureanhydrid, Vinylacetat, N-substituiertem Maleinimid oder Mischungen daraus. Es handelt sich bevorzugt um Copolymerisate aus 95 - 50 Gew.-% Styrol, α-Methylstyrol, Methylmethacrylat oder Mischungen daraus mit 5 - 50 Gew.-% Acrylnitril, Methacrylnitril, Methylmethacrylat, Maleinsäureanhydrid oder Mischungen daraus. Solche Copolymere entstehen auch bei der Pfropfmischpolymerisation als Nebenprodukte. Es ist üblich, neben den in Pfropfpolymerisat enthaltenden Copolymeren noch getrennt hergestellten Copolymere zuzumischen.

Diese müssen nicht mit den in den Pfropfpolymeren vorliegenden ungepfropften Harzanteilen chemisch identisch sein.

Geeignete getrennt hergestellte Copolymere sind harzartig, thermoplastisch und kautschukfrei; es sind insbesondere Copolymere aus Styrol und/oder α-Methylstyrol mit Acrylnitril, gegebenenfalls in Mischung mit Methylmethacrylat.

Besonders bevorzugte Copolymerisate bestehen aus 20 - 40 Gew.-% Acrylnitril und 80 - 60 Gew.-% Styrol oder α-Methylstyrol. Solche Copolymerisate sind bekannt und lassen sich insbesondere durch radikalische Polymerisation, insbesondere durch Emulsion-, Suspension-, Lösungs- oder Massepolymerisation herstellen. Die Copolymerisate besitzen vorzugsweise Molekulargewichte von 15.000 bis $2.10^5$.

Die modifizierten Polyether (II) im Sinne der Erfindung werden durch Behandlung von Polyethern mit Radikalbildnern hergestellt.

Die erfindungsgemäß zu modifizierenden Polyalkylenether sind aus di- und polyfunktionellen (cyclo)-aliphatischen Resten aufgebaut und können in geringem Maße auch olefinische Gruppen enthalten. Geeignet sind Reaktionsprodukte aus Di- oder Polyolen, Ethylenglykol, 1,2-Propylenglykol, Trimethylolpropan, Glycerin, Pentaerythrit, Sorbit und Mannit und einem oder mehreren Alkylenoxiden, wie Ethylenoxid und Propylenoxid. (Herstellung und Verwendung siehe Ullmanns Encyklopädie der technischen Chemie, 4. Aufl., Bd. 19, S. 31, Verlag Chemie, Weinheim 1980). Dabei werden Polyalkylenether mit hohen Anteilen an 1,2-Propylenstrukturen bevorzugt.

Es können sowohl lineare als auch verzweigte Polyalkylenether verwendet werden, wobei mäßig verzweigte Typen bevorzugt werden.

Die "Ausgangs"-Polyalkylenether besitzen Molekulargewichte zwischen 500 und 15.000, bevorzugt zwischen 1000 und 10.000 und besonders bevorzugt zwischen 2000 und 5000.

Als radikalbildende Substanzen kommen als Initiatoren für die radikalische Polymerisation handelsübliche Verbindungen sowie alle sonstigen Verbindungen in Frage, die bei Temperaturen zwischen 20 und 200°C ausreichend schnell in Radikale zerfallen. So kann man beispielsweise Diacylperoxide wie Dibenzoylperoxid, substituierte Dibenzoylperoxide und Dilaurylperoxid, Acylsulfonylperoxide wie Acetylcyclohexansulfonylperoxid, Peroxidicarbonate wie Dicyclohexyl- und Di-tert.-butylperoxidicarbonat, Acylperester wie tert.-Butylperpivalat und tert.-Butylperbenzoat, Dialkylperoxide wie Dicumyl- und Di-tert.-butylperoxid, Hydroperoxide wie Cumylhydroperoxid und tert.-Butylhydroperoxid und andere Peroxiverbindungen sowie aliphatische und araliphatische Azoverbindungen einsetzen. Bevorzugte Radikalbildner zerfallen ausreichend schnell bei Temperaturen von 60 - 140° C, z. B. Azodiisobutyronitril, Di-tert.-butylperoxid, Dibenzoylperoxid, tert.-Butylperbenzoat, Dicumylperoxid und 1,3-Bis-(tert.-butylperoxyisopropyl)benzol. Besonders bevorzugt wird Dibenzoylperoxid verwendet.

Die Menge der Radikalbildner bezogen auf die Menge an Polyalkylenether beträgt 5 - 0,05 Gew.-%, bevorzugt 2,0 - 0,1 Gew.-% und besonders bevorzugt 1,0 - 0,25 Gew.-%.

Die erfindungsgemäßen modifizierten Polyalkylenether kann man durch einfaches Rühren des Radikalbildners mit dem jeweiligen Polyalkylenether bei Temperaturen zwischen 50 und 150° C herstellen.

Die so erhaltenen modifizierten Polyalkylenether können nach bekannten Methoden z. B. durch gemeinsames Kneten, Verwalzen oder Extrudieren in die auszurüstenden Polymeren eingearbeitet werden.

In einer weiteren Ausführungsform der Erfindung kann auch eine Mischung aus einem erfindungsgemäß zu verwendenden Radikalbildner und einem erfindungsgemäß zu verwendenden Polyether in den angegebenen Verhältnissen in das auszurüstende Polymer unter den üblichen Verarbeitungsbedingungen, z. B. in einem Kneter oder Extruder bei 160 - 220° C eingearbeitet werden.

Neben den erfindungsgemäßen Antistatika können den Formmassen die üblichen Zusätze wie z. B. Pigmente, Füllstoffe, Stabilisatoren, Gleitmittel, Entformungsmittel, Flammschutzmittel und dergleichen zugesetzt werden.

Die so erhaltenen erfindungsgemäßen Formmassen werden mit den für Thermoplaste üblichen Methoden zu Fertigteilen z. B. Gehäuseteilen für Haushalts- und Elektrogeräte, Profilteilen, Folien, Automobilinnenausstattungen etc. verarbeitet.

Die fertigen Formteile zeichnen sich durch hervorragendes antistatisches Verhalten und insbesondere durch belagfreie, homogene und glänzende Oberflächen aus. Die mechanischen Eigenschaften, speziell die Wärmeformbeständigkeit und die Schlagzähigkeit, auch bei tiefen Temperaturen, sind im Vergleich zum unmodifizierten Material praktisch nicht beeinträchtigt. Ebensowenig wird die Farbe der Formteile beeinflußt.

Beispiele

Komponenten I:

Polymerisat I-A:

a) 60 Gew.-Teile thermoplastische SAN-Harzphase aus 72 Gew.-Teilen Styrol und 28 Gew.-Teilen Acrylnitril mit einer Grenzviskosität $\pi_i$ = 55 (ml/g) (gemessen in DMF bei 23° C) und
b) 40 Gew.-Teilen Elastomerphase, bestehend aus einem Pfropfpolymerisat von 36 Gew.-Teilen Styrol und 14 Gew.-Teilen Acrylnitril auf 50 Gew.-Teilen Polybutadien. Die Pfropfgrundlage ist 50 : 50 %ig bimodal mit $D_{50}$-Werten von etwa 400 und 100 nm.

Polymerisat I-B:

Zusammensetzung wie I-A, jedoch mit 1 Gew.-% Farbruß schwarz eingefärbt.

Polymerisat I-C:

Zusammensetzung wie bei I-A, jedoch besitzt die thermoplastische SAN-Harzphase eine Grenzviskosität $\pi_i$ = 75 ml/g (gemessen in DMF bei 23° C).
Das Polymerisat I-C enthält kein Farbmittel.

Polyether II:

Polyether II-a

1,00 kg eines linearen Polypropylenethers mit mittlerer Molmasse $M_N$ = 2.000 (OH-Zahl = 56) werden i. Vak. unter Erhitzen entgast und beim Abkühlen mit Stickstoff gesättigt. Bei ca, 40° C gibt man 5,0 g käufliches Dibenzoylperoxid zu und erhitzt die Mischung unter Stickstoff 8 h lang auf 80-85° C.

Polyether II-b

1,00 kg des bei II-a verwendeten Polypropylenethers wird analog zum voranstehenden Versuch mit 10,0 g Dibenzoylperoxid behandelt.

Polyether II-c

200 g des bei II-a verwendeten Polypropylenethers werden im Vakuum unter Erhitzen entgast und beim Abkühlen mit Stickstoff gesättigt. Bei ca. 35°C gibt man 0,75 g käufliches Azobisisobutyronitril zu und erhitzt die Mischung unter Stickstoff 8 h lang auf 70-75°C.

Polyether II-d

200 g des bei II-a verwendeten Polypropylenethers werden analog zum voranstehenden Versuch mit 0,70 g Di-tert.-butylperoxid 8 h lang bei 130-135°C behandelt.

Polyether II-e

Aus 250 g des bei II-a verwendeten linearen Polypropylenether und einer Lösung von 1,5 g käuflichem Dibenzoylperoxid in 50 ml Ethylacetat wird bei 20°C eine homogene Mischung hergestellt und anschließend das Lösungsmittel im Vakuum abdestilliert.

Polyether II-f

Aus 250 g eines verzweigten Polyalkylenether auf Basis Trimethylolpropan, Propylenoxid und Ethylenoxid und OH-Zahl = 34 und 1,25 g 1,3-Bis-(tert.-butylperoxyisopropyl)benzol wird analog zum voranstehenden Versuch eine homogene Mischung hergestellt.

Polyether II-g zum Vergleich

Lineares Polypropylenether mit mittlerer Molmasse $M_N$ = 2.000. (Identisch mit Ausgangsmaterial in II-a)

Polyether II-h zum Vergleich

Trishydroxyethyliertes Dodecylamin.

Einarbeitung der Komponenten II (antistatische Mittel) in die Komponenten I:
Die Komponenten I lagen als handelsübliche ABS-Polymerisate in Granulatform vor.
Die antistatischen Mittel wurden zugewogen und durch gemeinsames Kneten unter Aufschmelzen in einem 3 l-Innenkneter vom BANBURY-Typ homogen im ABS-Polymeren verteilt. Innerhalb von 3 bis 5 min Knetzeit stieg die Temperatur auf Werte bis zu 210°C. Die ausgeworfenen Schmelzen (Puppen) wurden flachgewalzt, geschnitten und granuliert. Prüfkörper wurden durch Spritzgießen entsprechend der üblichen Arbeitsweise hergestellt.
Die Prüfung des antistatischen Verhaltens erfolgte durch Auslegen von Formteilen der Abmessungen 155x75x2 (mm) in stark staubiger Umgebung und Beobachtung der Staubfigurenentwicklung (1 bis mehrere Tage, danach über einige Wochen). Die nicht antistatisch ausgerüstete Vergleichsprobe und Proben mit Ausrüstung entsprechend dem Stand der Technik waren Bestandteile jeder Prüfserie.
Das gleiche Formteil wurde zur Begutachtung der Oberflächenqualität benutzt (Glanz, Einheitlichkeit, Fleckenbildung, Fließlinienausbildung).
Die Glanzmessung erfolgte nach ASTM D 523 bzw. DIN 67 530. Als praxisgerechtes Formteil wurde in einigen Fällen ein Telefongehäuse gespritzt. An den gekrümmten Flächen sind auch leichte Unterschiede der Oberflächenqualität zu erkennen.
Zur Prüfung der Thermostabilität wurden Musterplättchen der Dimension 60x40x2 (mm) im (langen) 75 sec-Zyklus über von 220 auf 280°C ansteigender Massetemperatur spritzgegossen. Visuell wurden Rohton, Farbänderungen und Veränderungen der Oberflächenbeschaffenheit (z.B. Bildung von Silberschlieren) beobachtet.
An Normkleinstäben 50x6x4 (mm) wurden die wichtigsten mechanischen Werte ermittelt (Schlag- und Kerbschlagzähigkeit nach DIN 53 453, Härte nach DIN 53 456) sowie die als Entwicklungsziel wichtige Vicat-Erweichungstemperatur (B 120 nach DIN 53 460).

Die Vicat-Erweichungstemperaturen wurden als Differenzwerte (Δ Vicat) im Vergleich zu den nicht antistatisch ausgerüsteten Polymerisaten I-A bis C angegeben.

Zur besseren Übersichtlichkeit wurden alle Prüfergebnisse in den Tabellen durch Symbole ausgedrückt.

Es bedeutet:

+ = sehr gut

## Tabelle

| Bsp. | Polymeri-sat I | Polyether II | $C_{II}$ (Gew.-%) | Thermo-stabilität | Prüfergebnisse Ober-fläche | ΔVicat (°C) | antistati-sche Wirkung |
|---|---|---|---|---|---|---|---|
| 1 | A | - | - | + | + | 0 | - |
| 2 | B | - | - | | + | 0 | - |
| 3 | C | - | - | (+) | (+) | 0 | - |

**erfindungsgemäß**

| Bsp. | Polymeri-sat I | Polyether II | $C_{II}$ (Gew.-%) | Thermo-stabilität | Prüfergebnisse Ober-fläche | ΔVicat (°C) | antistati-sche Wirkung |
|---|---|---|---|---|---|---|---|
| 4 | A | a | 1,0 | + | + | -0,5 | (+) |
| 5 | A | a | 1,5 | | + | -1,0 | + |
| 6 | B | a | 1,0 | | + | 0 | (+) |
| 7 | A | b | 1,0 | + | + | -1,5 | + |
| 8 | A | c | 1,5 | + | + | -1,5 | (+) |
| 9 | A | d | 1,5 | + | + | -1,0 | + |
| 10 | C | e | 1,0 | | + | -1,0 | + |
| 11 | C | f | 1,0 | | + | -2,0 | + |

**zum Vergleich**

| Bsp. | Polymeri-sat I | Polyether II | $C_{II}$ (Gew.-%) | Thermo-stabilität | Prüfergebnisse Ober-fläche | ΔVicat (°C) | antistati-sche Wirkung |
|---|---|---|---|---|---|---|---|
| 12 | A | g | 1,0 | | 1 | -4,0 | 1 |
| 13 | C | g | 1,0 | | + | -2,0 | - |
| 14 | A | h | 1,0 | 1 | (+) | -3,5 | + |
| 15 | C | h | 1,0 | | 1 | -4,0 | (+) |

6

( + ) =     gut

| =     mit Schwächen

(-) =     schwach

- =     unbrauchbar

Aus der Tabelle ist zu erkennen, daß die erfindungsgemäßen antistatischen Mittel deutliche Vorteile gegenüber den dem Stand der Technik entsprechend verwendeten Antistatika aufweisen: bei vergleichbarer antistatischer Wirksamkeit senken sie die Wärmeformbeständigkeit wesentlich weniger ab, sie führen zu verbesserter Thermostabilität und zu Formteiloberflächen mit geringerer Neigung zu visuell sichtbaren Störeffekten.

**Patentansprüche**

**1.** Thermoplastische Formmassen aus

I 99,8 - 95 Gew.-% eines gegebenenfalls kautschukmodifizierten Polymerisats aus Vinylaromaten, anderen Vinylmonomeren und üblichen Zusätzen, bestehend aus

(A) 0 - 100 Gew.-% eines oder mehrerer Pfropfpolymerisate aus 10-95 Gew.-% Kautschuk und 90-5 Gew.-% auf den Kautschuk pfropfcopolymerisierte Monomere, wobei als Monomere Styrol, $\alpha$-Methylstyrol, Methylmethacrylat ausgewählt sind oder eine Mischung von 95-50 Gew.-% Styrol, $\alpha$-Methylstyrol, kernsubstituiertem Styrol, Methylmethacrylat oder Mischungen daraus und 5 - 50 Gew.-% (Meth)Acrylnitril, Maleinsäureanhydrid, N-substituierte Maleinimide oder Mischungen daraus pfropfpolymerisiert sind und die Kautschuke Glasübergangstemperaturen < 10$^\circ$C aufweisen und in Form wenigstens partiell vernetzter Teilchen eines mittleren Teilchendurchmessers ($d_{50}$) von 0,05 bis 20 $\mu$m vorliegen, und

(B) 100 - 0 Gew.-% eines oder mehrerer thermoplastischer Vinylpolymerisate, wobei die Monomere ausgewählt sind aus der Reihe Styrol, $\alpha$-Methylstyrol, kernsubstituiertem Styrol, Methylmethacrylat, Acrylnitril, Methacrylnitril, Maleinsäureanhydrid, Vinylacetat, N-substituierte Maleinimide oder Mischungen daraus, und

II. 0,2 bis 5,0 Gew.-% eines-Polyalkylenethers mit Molekulargewichten zwischen 500 und 15.000, der ein Reaktionsprodukt aus Polyolen und einem oder mehreren Alkylenoxiden ist und der mit 5 bis 0,05 Gew.-% Radikalbildner, bezogen auf die Menge an Polyalkylenether modifiziert ist, die zwischen 20 und 200$^\circ$C ausreichend schnell in Radikale zerfallen.

**2.** Verfahren zur antistatischen Ausrüstung von gegebenenfalls kautschukmodifizierten Polymerisaten aus Vinylaromaten, anderen Vinylmonomeren und üblichen Zusätzen gemäß Anspruch 1, dadurch gekennzeichnet, daß man zu 99,8 bis 95 gew. % Polymerisat I 0,2 bis 5 Gew.-% eines Polyalkylenethers II gemäß Anspruch 1 zufügt.

**Claims**

**1.** Thermoplastic moulding compounds of

I from 99.8 - 95% by weight of an optionally rubber modified polymer of aromatic vinyl compounds, other vinyl monomers and conventional additives, consisting of

(A) from 0 to 100% by weight of one or more graft polymers of from 10 to 95% by weight of rubber and from 90 to 5% by weight of monomers graft copolymerised on the rubber, the monomers being selected from styrene, $\alpha$-methylstyrene and methyl methacrylate, or a mixture of from 95 to 50% by weight of styrene, $\alpha$-methylstyrene, styrene substituted in the nucleus, methyl methacrylate or mixtures thereof and from 5 to 50% by weight of (meth)acrylonitrile, maleic acid anhydride, N-substituted maleiimides or mixtures thereof being graft polymerised and the rubbers having glass transition temperatures < 10$^\circ$C and being present in the form of at least partially cross-linked particles having an average particle diameter ($d_{50}$) of from 0.05 to 20 $\mu$m and

(B) from 100 to 0% by weight of one or more thermoplastic vinyl polymers, the monomers being selected from styrene $\alpha$-methylstyrene, styrene substituted in the nucleus, methyl methacrylate, acrylonitrile, methacrylonitrile, maleic acid anhydride, vinyl acetate, N-substituted maleiimides or mixtures thereof and

II. from 0.2 to 5.0% by weight of a polyalkylene ether having molecular weights of from 500 to 15,000, which polyalkylene ether is a reaction product of polyols and one or more alkylene oxides and is modified with 5 to 0.05% by weight of radical formers, based on the quantity of polyalkylene ethers, which decompose into radicals sufficiently rapidly at 20 to 200˚ C.

**2.** A process for antistatic finishing optionally rubber modified polymers of aromatic vinyl compounds, other vinyl monomers and conventional additives according to Claim 1, characterised in that from 0.2 to 5% by weight of a polyalkylene ether (II) according to Claim 1 are added to 99.8 to 95% by weight of polymer I.

**Revendications**

**1.** Matières à mouler thermoplastiques consistant en

I. 99,8 à 95 % en poids d'un polymère, éventuellement modifié par un caoutchouc, de monomères vinylaromatiques, d'autres monomères vinyliques et d'additifs usuels, consistant en :
(A) 0 à 100 % en poids d'un ou plusieurs polymères greffés constitués de 10 à 95 % en poids de caoutchouc et 90 à 5 % en poids de monomères copolymérisés par greffage sur le caoutchouc, les monomères étant choisis parmi le styrène, l'alpha-méthylstyrène, le méthacrylate de méthyle ou consistant en un mélange de 95 à 50 % en poids de styrène, d'alpha-méthylstyrène, de styrène substitué dans le noyau, de méthacrylate de méthyle ou leurs mélanges et 5 à 50 % en poids de (méth)acrylonitrile, d'anhydride maléique, de maléimides substitués à l'azote ou leurs mélanges, polymérisés par greffage, et les caoutchoucs ayant des températures de transition du second ordre inférieures à 10˚ C et étant à l'état de particules, réticulées en partie au moins, à un diamètre moyen ($d_{50}$) de 0,05 à 20 $\mu$m, et
(B) 100 à 0 % en poids d'un ou plusieurs polymères vinyliques thermoplastiques dont les monomères sont choisis dans le groupe formé par le styrène, l'alpha-méthylstyrène, un styrène substitué dans le noyau, le méthacrylate de méthyle, l'acrylonitrile, le méthacrylonitrile, l'anhydride maléique, l'acétate de vinyle, les maléimides substitués à l'azote ou leurs mélanges, et
II. 0,2 à 5,0 % en poids d'un éther de polyalkylène de poids moléculaire 500 à 15 000, qui consiste en un produit de réaction de polyols et d'un ou plusieurs oxydes d'alkylène et est modifié par 5 à 0,05 % de son poids d'un inducteur radicalaire se décomposant suffisamment rapidement en radicaux libres à des températures de 20 à 200˚ C.

**2.** Procédé pour l'apprêtage antistatique de polymères, éventuellement modifiés par un caoutchouc, de monomères vinylaromatiques, d'autres monomères vinyliques et d'additifs usuels selon la revendication 1, caractérisé en ce que, à 99,8 à 95 % en poids du polymère I, on ajoute de 0,2 à 5 % en poids d'un éther de polyalkylène II selon la revendication 1.